# EUROPÄISCHE PATENTSCHRIFT

(11) **EP 2 013 494 B1**
(45) Veröffentlichungstag und Bekanntmachung des Hinweises auf die Patenterteilung: **18.11.2009**
(21) Anmeldenummer: 08707814.3
(22) Anmeldetag: 28.02.2008
(51) Int. Cl.: F16B 39/02

(54) **BEFESTIGUNGSVORRICHTUNG**
FASTENING DEVICE
DISPOSITIF DE FIXATION

(30) Priorität: 01.03.2007 DE 102007010020
(43) Veröffentlichungstag der Anmeldung: 14.01.2009
(73) Patentinhaber: SAF-HOLLAND GmbH, 63856 Bessenbach (DE)
(72) Erfinder: SCHEWERDA, Steffen, 63739 Aschaffenburg (DE)
(74) Vertreter: Bauer, Clemens
(86) Internationale Anmeldenummer: PCT/EP2008/001588
(87) Internationale Veröffentlichungsnummer: WO 2008/104395

(56) Entgegenhaltungen:
- DE-A1- 3 410 873
- DE-C1- 3 525 947
- US-A- 1 301 958
- US-A- 1 328 939

## Beschreibung

Die vorliegende Erfindung betrifft eine Befestigungsvorrichtung für eine Mutter, insbesondere eine Achsmutter, wie eine Fahrzeugachsmutter, sowie eine Schraubverbindung,insbesondere für Fahrzeugachsen. Das Dokument DE-3410873 kann als nächstliegendes Stand der Technik betrachtet werden. Befestigungsvorrichtungen für eine Mutter sind hinlänglich aus dem Stand der Technik bekannt. So offenbart beispielsweise die US-733,532 eine Achsmuttersicherung, welche einstückig mit einer zu sichernden Achsmutter ausgebildet ist. Die Achsmuttersicherung weist eine elastische Gabel auf, die ausgelegt ist, in entsprechende Rücksprünge im Inneren der Achse einzugreifen. Problematisch bei derartigen Befestigungsvorrichtungen ist jedoch, daß bei sich drehenden Schraubenelementen bzw. Achsen auf die Mutter ein sogenanntes "Weiterdrehmoment" ausgeübt wird, welches dazu führen kann, daß sich die Mutter löst.

Es ist somit Aufgabe der vorliegenden Erfindung, eine Befestigungsvorrichtung für eine Mutter, insbesondere eine Achsmutter, sowie eine Schraubverbindung, insbesondere für Fahrzeugachsen, vorzusehen, welche eine sichere Befestigung der Mutter an dem entsprechenden Schraubenelement gewährleisten.

Diese Aufgabe wird durch eine Befestigungsvorrichtung für eine Mutter, insbesondere eine Achsmutter, mit den im Anspruch 1 angegebenen Merkmalen sowie durch eine Schraubverbindung, insbesondere für Fahrzeugachsen, mit den im Anspruch 11 angegebenen Merkmalen gelöst. Bevorzugte Ausführungsformen ergeben sich aus den abhängigen Ansprüchen.

Erfindungsgemäß ist eine Befestigungsvorrichtung für eine Mutter, insbesondere eine Achsmutter, vorgesehen, umfassend einen Befestigungsteil, welcher ausgelegt ist, mit einem Schraubenelement in Eingriff zu gelangen, einen Sicherungsteil, welcher ausgelegt ist, mit der Mutter in Eingriff zu gelangen, und einen Zwischenteil, welcher eine kraftschlüssige Verbindung zwischen dem Befestigungsteil und dem Sicherungsteil konstituiert, wobei der Zwischenteil aus einem rückstellfähigen Material ausgebildet ist und ausgelegt ist, bei einer Verdrehung des Sicherungsteils gegenüber dem Befestigungsteil ein in den Ursprungszustand gerichtetes Rückstellmoment auszuüben. Die Befestigungsvorrichtung dient insbesondere der Befestigung einer Fahrzeugachsmutter, so daß die Befestigungsvorrichtung ebenfalls als Fahrzeugachsmutter-Befestigungsvorrichtung ausgebildet sein kann. Der Befestigungsteil ist vorteilhafterweise ausgelegt, mit einem Schraubenelement in Eingriff zu gelangen. Das Schraubenelement kann in beliebiger Form ausgestaltet sein und umfaßt somit vorzugsweise sämtliche geometrischen Konfigurationen, welche insbesondere ein Außengewinde aufweisen. Dies können insbesondere eine Schraube, ein Bolzen oder eine Achse sein. Durch den Eingriff zwischen Befestigungsteil und Schraubenelement wird vorteilhafterweise eine form- und/oder kraftschlüssige Verbindung zwischen Befestigungsteil und Schraubenelement gewährleistet. Das Schraubenelement dient insbesondere der Aufnahme der Mutter, d.h. die Mutter ist auf dem Schraubenelement zu befestigen bzw. zu schrauben. Der Sicherungsteil ist vorteilhafterweise ausgelegt, mit der Mutter in Eingriff zu gelangen. Der Eingriff kann hierbei insbesondere derart gestaltet sein, daß eine form- und/oder kraftschlüssige Verbindung zwischen dem Sicherungsteil der Befestigungsvorrichtung und der Mutter bereitgestellt wird. Weiterhin vorgesehen ist ein Zwischenteil, welcher vorteilhafterweise eine kraftschlüssige Verbindung zwischen dem Befestigungsteil und dem Sicherungsteil herstellt. Hierbei kann der Zwischenteil insbesondere als zwischen Befestigungsteil und Sicherungsteil angeordnetes Zwischenelement ausgebildet sein. Es versteht sich, daß das Zwischenteil ferner eine formschlüssige Verbindung zwischen dem Befestigungsteil und dem Sicherungsteil konstituieren kann, insbesondere bei einer integralen oder einstückigen bzw. -teiligen Ausführungsform der Befestigungsvorrichtung. Der Zwischenteil ist vorteilhafterweise aus einem rückstellfähigen Material ausgebildet. In anderen Worten ist der Zwischenteil derart ausgebildet, daß er bei einer Verformung dazu neigt, wieder in den ursprünglichen Zustand zurückzukehren. Insbesondere kann der Zwischenteil aus einem elastisch verformbaren Material ausgebildet sein. Die Rückstellfähigkeit kann jedoch zusätzlich oder alternativ ebenfalls durch die geometrische Konfiguration vorgesehen sein, beispielsweise in Form einer auf Torsion belastbaren Schraubenfeder. Der Zwischenteil ist ferner vorteilhafterweise ausgelegt, bei einer Verdrehung bzw. Torsion des Sicherungsteils gegenüber dem Befestigungsteil ein in den Ursprungszustand der Befestigungsvorrichtung gerichtetes Rückstellmoment auszuüben. Die Verdrehung bzw. Torsion des Sicherungsteils gegenüber dem Befestigungsteil erfolgt hierbei insbesondere um die Längsachse des Schraubenelements, welche im wesentlichen der Vorschubrichtung der Mutter beim Ein- und Ausdrehen entspricht. Der Ursprungszustand der Befestigungsvorrichtung ist hierbei derjenige Zustand, welchen die Befestigungsvorrichtung einnimmt, wenn auf diese keine äußeren Kräfte einwirken. Aufgrund der rückstellfähigen Eigenschaften des Zwischenteils wird somit auf den Befestigungsteil und den Sicherungsteil ein entsprechendes Rückstellmoment - verursacht durch das Zwischenteil - ausgeübt. Hierdurch ist es vorteilhafterweise möglich, auf die Mutter ein in Eindrehrichtung wirkendes Moment auszuüben, um somit zu gewährleisten, daß sich die Mutter von dem Schraubenelement nicht löst, sondern vielmehr dazu tendiert, sich weiter auf das Schraubenelement einzudrehen.

Vorzugsweise ist der Zwischenteil als tordierbares, vorzugsweise im wesentlichen plattenförmiges Element ausgebildet. Der Zwischenteil ist somit vorzugsweise derart ausgebildet, daß dieser in sich verdreht werden kann, wobei insbesondere die Verdrehung über eine Materialverformung des Zwischenteils erfolgt. Hierbei kann der Zwischenteil als im wesentlichen plattenförmiges Element ausgebildet sein. So kann der Zwischenteil beispielsweise als im wesentlichen rechteckiges plattenförmiges Element ausgebildet sein, welches um seine Längsachse so verdreht bzw. tordiert wird, daß dessen freie Enden gegeneinander verdreht sind. Infolgedessen kann der Zwischenteil als Torsionselement oder Torsionsfeder ausgebildet sein. Es versteht sich, daß nicht nur plattenförmige Konfigurationen, sondern ebenfalls beliebig andere Konfigurationen möglich sein können. So kann der Zwischenteil beispielsweise zylinderförmig ausgebildet sein, wobei die freien Zylinderenden gegeneinander verdrehbar sind.

Bevorzugterweise weist der Befestigungsteil zumindest einen Befestigungsabschnitt auf, welcher ausgelegt ist, mit der Innenwandung eines Rücksprungs des Schraubenelements in Eingriff zu gelangen. Der Eingriff kann hierbei insbesondere form- und/oder kraftschlüssig erfolgen. Der Rücksprung des Schraubenelements ist vorteilhafterweise derart ausgebildet, daß dieser sich von einer Stirnseite des Schraubenelements in im wesentlichen zur Schraubenlängsachse paralleler Richtung in das Schraubenelement hinein erstreckt. Die Innenwandung des Schraubenelements definiert daher den Rücksprung. Der Befestigungsabschnitt des Befestigungsteils kann insbesondere mit der umfänglichen Innenwandung des Rücksprungs in Eingriff gelangen. Zusätzlich oder alternativ kann der Befestigungsabschnitt jedoch auch mit der Stirnwandung des Rücksprungs in Eingriff gelangen. Der Befestigungsabschnitt des Befestigungsteils kann beliebig ausgestaltet sein, wobei dieser insbesondere derart ausgebildet ist, daß ein form- und/oder kraftschlüssiger Eingriff mit dem Rücksprung gewährleistet wird.

Vorteilhafterweise weist der Befestigungsteil eine Vielzahl, vorzugsweise zwei oder ein Vielfaches davon, Befestigungsabschnitten auf, welche vorzugsweise gegenüberliegend angeordnet sind. Die Befestigungsabschnitte sind hierbei im wesentlichen entsprechend obiger Ausführungen ausgebildet. Insbesondere sind die Befestigungsabschnitte derart zueinander angeordnet, daß diese in bezug auf die Längsachse des Schraubenelements im wesentlichen gegenüberliegend angeordnet sind.

Zweckmäßigerweise ist der Befestigungsabschnitt derart ausgebildet, daß dieser in einen im wesentlichen nutförmigen Rücksprung des Schraubenelements eingreifen kann. Daher ist der Befestigungsabschnitt in seiner geometrischen Konfiguration derart ausgebildet, daß dieser im wesentlichen kongruent zu einer Nut geformt ist, um somit mit dem nutförmigen Rücksprung des Schraubenelements einen im wesentlichen Formschluß zu erzielen.

Vorteilhafterweise weist der Befestigungsabschnitt zumindest einen Verrastvorsprung auf. Der Verrastvorsprung kann insbesondere krallenartig, beispielsweise als Widerhaken, ausgebildet sein. Hierbei ist der Verrastvorsprung insbesondere vorteilhafterweise derart ausgebildet, daß dessen freies Ende im wesentlichen zum Sicherungsteil hin gerichtet ist. Der Verrastvorsprung ist vorteilhafterweise ausgelegt, in eine entsprechende Oberflächenkonfiguration des Schraubenelements einzugreifen. Der Eingriff kann so gestaltet sein, daß ein Entfernen der Befestigungsvorrichtung aus dem Schraubenelement zu einer Zerstörung des Verrastvorsprungs führt.

In einer weiteren bevorzugten Ausführungsform weist der Sicherungsteil zumindest einen Sicherungsabschnitt auf, welcher ausgelegt ist, mit der Außenwandung, insbesondere den Flanken der Mutter in Eingriff zu gelangen. Der Sicherungsabschnitt des Sicherungsteils ist somit insbesondere derart ausgebildet, daß ein Form- und/oder Kraftschluß zwischen der Außenwandung der Mutter und dem Sicherungsteil gewährleistet wird. Insbesondere ist der Sicherungsabschnitt derart ausgebildet, daß dieser mit den seitlichen Flanken der Mutter vorzugsweise über einen Formschluß in Eingriff gelangen kann. Somit wird gewährleistet, daß eine Rotation der Mutter ebenfalls zu einer rotatorischen Bewegung des Sicherungsabschnitts des Sicherungsteils führt.

Vorteilhafterweise weist der Sicherungsteil eine Vielzahl, vorzugsweise zwei oder ein Vielfaches davon, Sicherungsabschnitten auf, die vorzugsweise gegenüberliegend angeordnet sind. Hierbei sind die Sicherungsabschnitte in bezug auf die Längsachse des Schraubenelements im wesentlichen zueinander gegenüberliegend angeordnet. Durch das Vorsehen von zwei oder einem Vielfachen von zwei Sicherungsabschnitten wird ein besonders sicherer Formschluß zwischen Sicherungsteil und Mutter gewährleistet.

Zweckmäßigerweise ist der Sicherungsabschnitt als im wesentlichen U-förmiger Bügel ausgebildet, dessen die Schenkel des U's bildenden Seitenwände mit der Mutter in Eingriff gebracht werden können. Der Sicherungsabschnitt kann somit als plattenförmiges Element ausgebildet sein, dessen freie Enden derart abgekantet sind, daß dieser ein U ausbildet. Die Seitenwände dieses Sicherungsabschnitts können somit vorteilhafterweise mit im wesentlichen zwei gegenüberliegenden Flanken der Mutter in Eingriff gebracht werden, so daß ein besonders vorteilhafter Formschluß zwischen Sicherungsabschnitt und Mutter gewährleistet werden kann. Es versteht sich, daß der Sicherungsabschnitt ebenfalls jede andere beliebige Form aufweisen kann, mittels welcher ein Form- und/oder Kraftschluß zwischen Mutter und Sicherungsabschnitt ermöglicht wird. So kann der Sicherungsabschnitt beispielsweise als Kappe oder Käfig ausgebildet sein, der die Mutter, zumindest bereichsweise, bedeckt bzw. umschließt.

Vorzugsweise ist zumindest der Zwischenteil aus einem Metall, vorzugsweise Federstahl, ausgebildet. Hierdurch wird eine besonders vorteilhafte Rückstelleigenschaft des Zwischenteils gewährleistet.

Weiterhin vorzugsweise sind zumindest der Befestigungsteil und der Sicherungsteil aus einem Kunststoff ausgebildet. So kann die Befestigungsvorrichtung beispielsweise derart ausgebildet sein, daß der Zwischenteil aus einem Federstahl und der Befestigungsteil sowie der Sicherungsteil aus einem Kunststoff, der vorzugsweise im wesentlichen hitzebeständig ist, ausgebildet sind. Alternativ kann jedoch auch die gesamte Befestigungsvorrichtung aus einem Metall ausgebildet sein.

Vorteilhafterweise ist die Befestigungsvorrichtung einteilig bzw. einstückig ausgebildet. So kann die Befestigungsvorrichtung beispielsweise als einstückiges Gußteil (bspw. als Spritzgussteil insbesondere aus Kunststoff) ausgebildet sein, welches besonders vorteilhaft bei einer Ausbildung der Befestigungsvorrichtung aus Kunststoff ist.

In einer weiteren bevorzugten Ausführungsform ist die Befestigungsvorrichtung zumindest bereichsweise aus einem temperatur-indizierendem Material ausgebildet. Dieses Material kann vorteilhafterweise derart ausgebildet sein, daß dieses ein irreversible Farbveränderung aufgrund eines Wärmeeintrags vollführt. Hierdurch ist es besonders vorteilhaft möglich, bei einer Wartung die entstandene Wärmeeinbringung in das Schraubenelement und/oder die Mutter nachzuvollziehen.

Weiterhin erfindungsgemäß ist eine Schraubverbindung, insbesondere für Fahrzeugachsen, vorgesehen, umfassend ein Schraubenelement, eine Mutter, insbesondere eine Achsmutter, und eine Befestigungsvorrichtung für die Mutter, welche einen Befestigungsteil, der mit dem Schraubenelement in Eingriff steht bzw. bringbar ist, einen Sicherungsteil, der mit der Mutter in Eingriff steht bzw. bringbar ist, und einen Zwischenteil aufweist, welcher eine kraftschlüssige Verbindung zwischen dem Befestigungsteil und dem Sicherungsteil herstellt, wobei der Zwischenteil aus einem rückstellfähigen Material ausgebildet ist und ausgelegt ist, bei einer Verdrehung des Sicherungsteils gegenüber dem Befestigungsteil ein in den Ursprungszustand gerichtetes Rückstellmoment auszuüben.

Vorteilhafterweise weist das Schraubenelement einen sich im wesentlichen in Axialrichtung erstreckenden Rücksprung auf, an dessen Innenwandung vorzugsweise eine sich im wesentlichen axial erstreckende Nut ausgebildet ist. Der Rücksprung erstreckt sich somit im wesentlichen in Axialrichtung bzw. Längsrichtung des Schraubenelements, wobei der Rücksprung jede beliebige geometrische Querschnittskonfiguration aufweisen kann. So kann der Rücksprung beispielsweise eine kreisförmige, ovale oder vieleckige Querschnittskonfiguration aufweisen, wobei aus fertigungstechnischen Gründen die kreisrunde Querschnittskonfiguration bevorzugt ist. An der Innenwandung des Rücksprungs ist zumindest eine sich im wesentlichen axial erstreckende Nut ausgebildet, wobei vorteilhafterweise zwei oder ein Vielfaches von zwei Nuten vorgesehen sein können. Diese können insbesondere im wesentlichen in bezug auf die Längsachse des Schraubenelements gegenüberliegend angeordnet sein.

Es versteht sich, daß die weiteren Vorteile und Merkmale der erfindungsgemäßen Befestigungsvorrichtung für eine Mutter ebenfalls in der erfindungsgemäßen Schraubverbindung vorgesehen sein können.

Weitere Vorteile und Merkmale der vorliegenden Erfindung ergeben sich aus der nachfolgenden beispielhaften Beschreibung bevorzugter Ausführungsformen der Erfindung mit Bezug auf die beigefügten Figuren. Es zeigen:
- Fig. 1: eine perspektivische Ansicht einer ersten bevorzugten Ausführungsform der erfindungsgemäßen Befestigungsvorrichtung.
- Fig.2: drei perspektivische Ansichten des Zwischenteils der bevorzugten Ausführungsform gemäß Fig. 1.
- Fig. 3: eine perspektivische Ansicht eines Schraubenelements einer bevorzugten Ausführungsform der erfindungsgemäßen Schraubverbindung.
- Fig. 4: eine perspektivische Ansicht einer Befestigungsvorrichtung an einer Mutter einer bevorzugten Ausführung der erfindungsgemäßen Schraubverbindung.

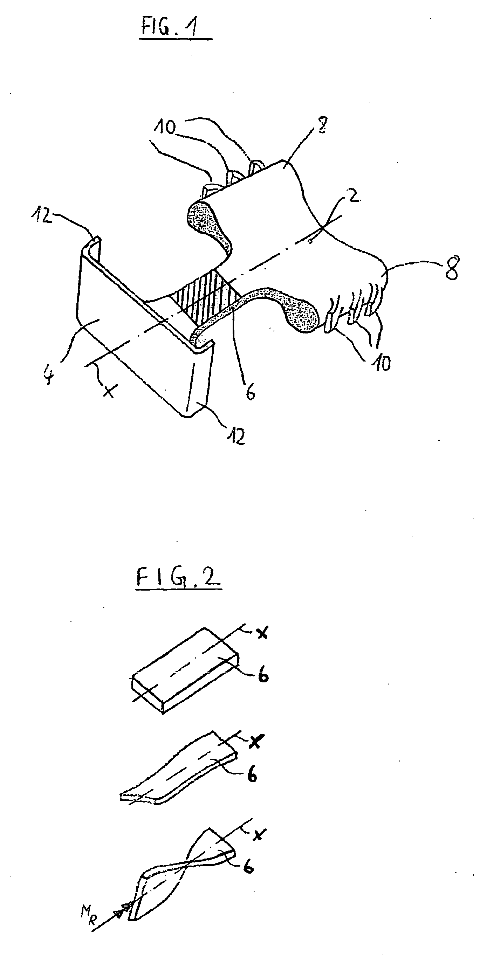

In Fig. 1 ist eine perspektivische Ansicht einer ersten bevorzugten Ausführungsform der erfindungsgemäßen Befestigungsvorrichtung dargestellt. Die Befestigungsvorrichtung umfaßt einen Befestigungsteil 2, einen Sicherungsteil 4 sowie einen Zwischenteil 6.

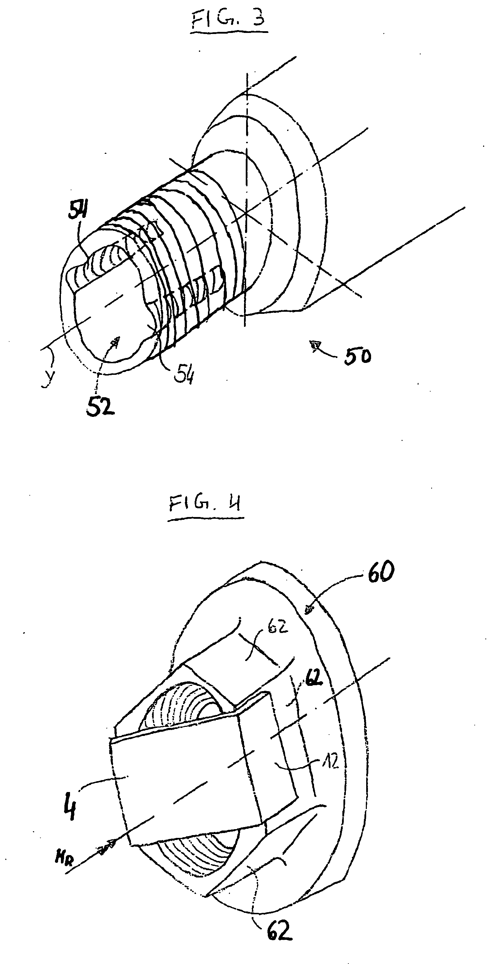

Der Befestigungsteil 2 ist ausgelegt, mit einem Schraubenelement 50 (vgl. Fig. 3) in Eingriff zu gelangen. Der Befestigungsteil 2 weist in der dargestellten Ausführungsform zwei Befestigungsabschnitte 8 auf, welche ausgelegt sind, mit der Innenwandung eines Rücksprungs 52 (vgl. Fig. 3) des Schraubenelements 50 in Eingriff zu gelangen. Die Befestigungsabschnitte 8 sind hierbei - bezogen auf eine Symmetrieachse X der Befestigungsvorrichtung - im wesentlichen zueinander gegenüberliegend angeordnet. Hierbei sind die freien Endbereiche der Befestigungsabschnitte 8 in ihrer geometrischen Konfiguration insbesondere derart ausgebildet, daß diese in einen im wesentlichen nutförmigen Rücksprung 54 des Schraubenelements 50 eingreifen können. Hierfür sind die freien Endbereiche der Befestigungsabschnitte 8 im wesentlichen formkongruent zu der Nut 54 des Schraubenelements 50 ausgebildet.

Besonders vorteilhafterweise weisen die Befestigungsabschnite 8 an ihren freien Endbereichen Verrastvorsprünge 10 auf, welche sich vorzugsweise von den freien Enden der Befestigungsabschnitte 8 weg erstrecken. Insbesondere sind die freien Enden der Verrastvorsprünge 10 im wesentlichen zum Sicherungsteil 4 hin gerichtet angeordnet. Die Verrastvorsprünge 10 erfüllen hierbei insbesondere die Funktion einer Sicherung gegen das in X-Richtung axiale Herauswandern der Befestigungsvorrichtung aus dem Schraubenelement 50. Im Falle eines gewaltsamen Entfernens aus dem Schraubenelement 50 sind die Verrastvorsprünge 10 vorteilhafterweise derart ausgebildet, daß diese abbrechen, so daß hierdurch indiziert wird, daß die Befestigungsvorrichtung schon einmal genutzt wurde.

Das Sicherungsteil 4 weist zwei Sicherungsabschnite 12 auf, welche ausgelegt sind, mit einer Außenwandung, insbesondere Flanken 62 einer Mutter 60, in Eingriff zu gelangen (vgl. Fig. 4). Die Sicherungsabschnitte 12 sind hierbei besonders vorteilhafterweise in bezug auf die Symmetrieachse X der Befestigungsvorrichtung im wesentlichen gegenüberliegend angeordnet. In der dargestellten Ausführungsform ist das Sicherungsteil 4 als im wesentlichen U-förmiger Bügel ausgebildet, dessen die Schenkel des U's bildenden Seitenwände die Sicherungsabschnitte 12 definieren. Es versteht sich, daß der Sicherungsteil 4 ebenfalls als die Mutter zumindest bereichsweise bedeckender bzw. umschließender Käfig oder Kappe ausgebildet sein kann.

Der Zwischenteil 6 stellt die Verbindung zwischen Befestigungsteil 2 und Sicherungsteil 4 dar. Infolgedessen gewährleistet der Zwischenteil 6 eine kraftschlüssige Verbindung zwischen dem Befestigungsteil 2 und dem Sicherungsteil 4. Der Zwischenteil 6 ist vorteilhafterweise als tordierbares, plattenförmiges Element ausgebildet (vgl. Fig. 2), welches als Torsionsfeder wirkt. Insbesondere ist der Zwischenteil 6 somit aus einem rückstellfähigen Material (beispielsweise Federstahl) ausgebildet, so daß bei einer Verdrehung bzw. Torsion des Sicherungsteils 4 gegenüber dem Befestigungsteil 2 um die Symmetrieachse X der Befestigungsvorrichtung ein in den Ursprungszustand gerichtetes Rückstellmoment M_{R} bewirkt wird.

Mittels der erfindungsgemäßen Befestigungsvorrichtung kann somit eine Schraubverbindung zwischen einem Schraubenelement 50 und einer Mutter 60 bereitgestellt werden, welche gewährleistet, daß sich die Mutter 60 nicht selbständig vom Schraubenelement 50 löst. Hierbei wird die Mutter 60 auf das Schraubenelement 50 bis zum gewünschten Maß aufgedreht. Anschließend wird die erfindungsgemäße Befestigungsvorrichtung so weit in den Rücksprung 52 des Schraubenelements 50 eingeführt, daß der Sicherungsteil 4 noch nicht mit der Mutter 60 in Eingriff steht. Während des Einführens des Befestigungsteils 2 in den Rücksprung 52 werden die Befestigungsabschnitte 8 des Befestigungsteils 2 in im wesentlichen sich in axialer Richtung bzw. Längsrichtung Y des Schraubenelements 50 erstreckende Nuten 54 geführt (Vorteilhafterweise ist die Längsrichtung Y des Schraubenelements 50 im wesentlichen parallel zur die Symmetrieachse X der Befestigungsvorrichtung bzw. mit dieser identisch). Hierbei greifen die Verrastvorsprünge 10 in eine entsprechende Oberflächenkonfiguration der Nuten 54 derart ein, daß eine Bewegung der Befestigungsvorrichtung entgegengesetzt zur Einschubrichtung (d.h. ein Entfernen der Befestigungsvorrichtung aus dem Schraubenelement 50) zu einer Zerstörung der Verrastvorsprünge 10 führen würde. In diesem teilweise eingeführten Zustand der Befestigungsrichtung wird das Sicherungsteil 4 nun in Löserichtung der Mutter 60 um ein vorbestimmtes Winkelmaß verdreht. Dieses Winkelmaß entspricht zumindest einer Verdrehung so weit, daß die Sicherungsabschnitte 12 mit den Flanken 62 der Mutter 60 fluchten. In diesem Zustand wird die Befestigungsvorrichtung nun so weit in den Rücksprung 52 des Schraubenelements 50 eingeführt, daß die Sicherungsabschnitte 12 mit den Flanken 62 der Mutter 60 in Eingriff gelangen.

Durch die Verdrehung des Sicherungsteils 4 gegenüber dem Befestigungsteil 2 tordiert der Zwischenteil 6 und erzeugt ein Torsions- bzw. Rückstellmoment M_{R}, welches in Feststellrichtung der Mutter 60 wirkt. Infolgedessen wird die Mutter 60 mit einem Rückstellmoment M_{R} belastet, so daß eine sichere Befestigung der Mutter 60 auf dem Schraubenelement 50 gewährleistet werden kann.

In einer besonders vorteilhaften Ausführungsform ist die Befestigungsvorrichtung zumindest bereichsweise aus einem temperatur-indizierenden Material ausgebildet. Die Temperaturindizierung kann insbesondere durch eine irreversible Farbveränderung bei einem Wärmeeintrag erfolgen. So kann das temperaturindizierende Material transparent ausgebildet sein und bei einem vorbestimmbaren Wärmeeintrag milchig oder opak werden. Hierdurch ist es möglich, bei einer Wartung die entsprechende Wärmeeinbringung aus - beispielsweise einem Wälzlager - in die Mutter 60 oder das Schraubenelement 50 nachzuvollziehen.

Besonders vorteilhaft ist der Einsatz der Befestigungsvorrichtung zur Sicherung von Muttern im Fahrzeugbau. Die Befestigungsvorrichtung kann somit als Achsmutter-Befestigungsvorrichtung ausgebildet sein, um die Muttern einer Achse eines Fahrzeugs gegen ein Herausdrehen während des Fahrbetriebs zu sichern. Das Schraubenelement 50 ist daher insbesondere als die Achse oder der Achsstummel eines Fahrzeugs definiert. Insbesondere können hierdurch die Achsmuttern eines Nutzfahrzeugs gesichert werden.

### Bezugszeichenliste

- 2: Befestigungsteil
- 4: Sicherungsteil
- 6: Zwischenteil
- 8: Befestigungsabschnitt
- 10: Verrastvorsprung
- 12: Sicherungsabschnitt
- 50: Schraubenelement
- 52: Rücksprung
- 54: Nut
- 60: Mutter
- 62: Flanke
- X: Symmetrieachse
- Y: Längsachse
- M_{R}: Rückstellmoment

## Patentansprüche

1. Befestigungsvorrichtung für eine Mutter (60), insbesondere eine Achsmutter, umfassend
einen Befestigungsteil (2), welcher ausgelegt ist, mit einem Schraubenelement (50) in Eingriff zu gelangen,
einen Sicherungsteil (4), welcher ausgelegt ist, mit der Mutter (60) in Eingriff zu gelangen, und
einen Zwischenteil (6), welcher eine kraftschlüssige Verbindung zwischen dem Befestigungsteil (2) und dem Sicherungsteil (4) konstituiert,
wobei der Zwischenteil (6) aus einem rückstellfähigen Material und als plattenförmiges Element ausgebildet ist und ausgelegt ist, bei einer Verdrehung des Sicherungsteils (4) gegenüber dem Befestigungsteil (2) ein in den Ursprungszustand gerichtetes Rückstellmoment (M_{R}) auszuüben,
wobei der Befestigungsteil (2) zumindest einen Befestigungsabschnitt (8) aufweist, welcher ausgelegt ist, mit einer sich axial erstreckenden Nut (54) in der Innenwandung eines sich axial erstreckenden Rücksprungs (52) des Schraubenelements (50) in Eingriff zu gelangen, und
wobei die Befestigungsvorrichtung einteilig ausgebildet ist.

2. Befestigungsvorrichtung nach Anspruch 1, wobei der Zwischenteil (6) als tordierbares Element ausgebildet ist.

3. Befestigungsvorrichtung nach einem der vorhergehenden Ansprüche, wobei der Befestigungsteil (2) eine Vielzahl, vorzugsweise zwei oder ein Vielfaches von zwei Befestigungsabschnitten (8) aufweist, die vorzugsweise gegenüberliegend angeordnet sind

4. Befestigungsvorrichtung nach einem der vorhergehenden Ansprüche, wobei der Befestigungsabschnitt (8) zumindest einen Verrastvorsprung (10) aufweist.

5. Befestigungsvorrichtung nach einem der vorhergehenden Ansprüche, wobei der Sicherungsteil (4) zumindest einen Sicherungsabschnitt (12) aufweist, welcher ausgelegt ist, mit der Außenwandung, insbesondere den Flanken (62) der Mutter (60) in Eingriff zu gelangen.

6. Befestigungsvorrichtung nach einem der vorhergehenden Ansprüche, wobei der Sicherungsteil (4) eine Vielzahl, vorzugsweise zwei oder ein Vielfaches von zwei Sicherungsabschnitten (12) aufweist, die vorzugsweise-gegenüberliegend angeordnet sind.

7. Befestigungsvorrichtung nach Anspruch 5 oder 6, wobei der Sicherungsabschnitt (12) als im Wesentlichen U-förmiger Bügel ausgebildet ist, dessen die Schenkel des U's bildende Seitenwände mit der Mutter (60) in Eingriff gebracht werden können.

8. Befestigungsvorrichtung nach einem der vorhergehenden Ansprüche, wobei zumindest der Zwischenteil (6) aus einem Metall, vorzugsweise Federstahl, ausgebildet ist.

9. Befestigungsvorrichtung nach einem der vorhergehenden Ansprüche, wobei zumindest der Befestigungsteil (2) und der Sicherungsteil (4) aus einem Kunststoff ausgebildet sind.

10. Befestigungsvorrichtung nach einem der vorhergehenden Ansprüche, welche zumindest bereichsweise aus einem temperatur-indizierendem Material ausgebildet ist.

11. Schraubverbindung, insbesondere für Fahrzeugachsen, umfassend ein Schraubenelement (50), eine Mutter (60), insbesondere eine Achsmutter, und eine Befestigungsvorrichtung für die Mutter (60), welche
einen Befestigungsteil (2), der mit dem Schraubenelement (50) in Eingriff steht bzw. bringbar ist,
einen Sicherungsteil (4), der mit der Mutter (60) in Eingriff steht bzw. bringbar ist, und
einen Zwischenteil (6) aufweist, welcher eine kraftschlüssige Verbindung zwischen dem Befestigungsteil (2) und dem Sicherungsteil (4) konstituiert,
wobei der Zwischenteil (6) aus einem rückstellfähigen Material und als plattenförmiges Element ausgebildet ist und ausgelegt ist, bei einer Verdrehung des Sicherungsteils (4) gegenüber dem Befestigungsteil (2) ein in den Ursprungszustand gerichtetes Rückstellmoment (M_{R}) auszuüben,
wobei der Befestigungsteil (2) zumindest einen Befestigungsabschnitt (8) aufweist, welcher ausgelegt ist, mit einer sich axial erstreckenden Nut (54) in der Innenwandung eines sich axial erstreckenden Rücksprungs (52) des Schraubenelements (50) in Eingriff zu gelangen, und
wobei die Befestigungsvorrichtung einteilig ausgebildet ist.

## Claims

1. Fastening device for a nut (60), especially an axle nut, comprising
a fastening part (2), which is designed to engage with a screw element (50),
a securing part (4), which is designed to engage with the nut (60), and
an intermediate part (6), which constitutes a force-fit or non-positive connection between the fastening part (2) and the securing part (4),
wherein the intermediate part (6) is made of a resilient or restorable material and as a sheetlike element and is designed to apply a restoring torque (M_{R}) directed at the original state upon rotation of the securing part (4) relative to the fastening part (2),
wherein the fastening part (2) has at least one fastening segment (8) which is designed to engage with an axially extending groove (54) in the inner wall of an axially extending recess (52) of the screw element (50), and wherein the fastening device is formed as a single part.

2. Fastening device per claim 1, wherein the intermediate part (6) is configured as a twistable element.

3. Fastening device per one of the preceding claims, wherein the fastening part (2) has a plurality, preferably two or a multiple thereof, of fastening segments (8), which are preferably arranged opposite each other.

4. Fastening device per one of the preceding claims, wherein the fastening segment (8) has at least one locking projection (10).

5. Fastening device per one of the preceding claims, wherein the securing part (4) has at least one securing segment (12), which is designed to engage with the outer wall, especially the flanks (62) of the nut (60).

6. Fastening device per one of the preceding claims, wherein the securing part (4) has a plurality, preferably two or a multiple thereof, of securing segments (12), which are preferably arranged opposite to each other.

7. Fastening device per claim 5 or 6, wherein the securing segment (12) is fashioned as an essentially U-shaped shackle, whose side walls forming the legs of the U can engage with the nut (60).

8. Fastening device per one of the preceding claims, wherein at least the intermediate part (6) is made from a metal, preferably spring steel.

9. Fastening device per one of the preceding claims, wherein at least the fastening part (2) and the securing part (4) are made from a plastic.

10. Fastening device per one of the preceding claims, which is made at least partly from a temperature indicating material.

11. Screw connection, especially for vehicle axles, comprising a screw element (50), a nut (60), especially an axle nut, and a fastening device for the nut (60), which has
a fastening part (2), which engages or can be made to engage with the screw element (50),
a securing part (4), which engages or can be made to engage with the nut (60), and
an intermediate part (6), which constitutes a force-fit or non-positive connection between the fastening part (2) and the securing part (4),
wherein the intermediate part (6) is made of a resilient or restorable material and as a sheetlike element and is designed to apply a restoring torque (M_{R}) directed at the original state upon rotation of the securing part (4) relative to the fastening part (2),
wherein the fastening part (2) has at least one fastening segment (8) which is designed to engage with an axially extending groove (54) in the inner wall of an axially extending recess (52) of the screw element (50) and wherein the fastening device is formed as a single part.

## Revendications

1. Dispositif de fixation pour un écrou (60), en particulier un écrou d'essieu, comprenant
une partie de fixation (2) qui est conçue pour venir en engagement avec un élément de vissage (50),
une partie de blocage (4) qui est conçue pour venir en engagement avec l'écrou (60), et
une partie intermédiaire (6) qui établit une liaison à coopération de forces entre la partie de fixation (2) et la partie de blocage (4),
dans lequel la partie intermédiaire (6) est réalisée en un matériau capable de récupération et sous la forme d'un élément en plaque, et est conçue de manière à exercer, en cas de rotation de la partie de blocage (4) par rapport à la partie de fixation (2), un couple de rappel (M_{R}) dirigé vers l'état d'origine,
dans lequel la partie de fixation (2) comprend au moins un tronçon de fixation (8) qui est conçu pour venir en engagement avec une gorge (54) qui s'étend axialement dans la paroi intérieure d'un ressaut (52), s'étendant axialement, de l'élément de vissage (50), et le dispositif de fixation est réalisé d'une seule pièce.

2. Dispositif de fixation selon la revendication 1, dans lequel la partie intermédiaire (6) est réalisée sous forme d'un élément capable d'être tordu.

3. Dispositif de fixation selon l'une des revendications précédentes, dans lequel la partie de fixation (2) comprend une pluralité de tronçons de fixation (8), de préférence au nombre de deux ou un multiple de deux, qui sont de préférence agencés en opposition.

4. Dispositif de fixation selon l'une des revendications précédentes, dans lequel le tronçon de fixation (8) comprend au moins une saillie d'enclenchement (10).

5. Dispositif de fixation selon l'une des revendications précédentes, dans lequel la partie de blocage (4) comprend au moins un tronçon de blocage (12), qui est conçu pour venir en engagement avec la paroi extérieure, en particulier avec les flancs (62) de l'écrou (60).

6. Dispositif de fixation selon l'une des revendications précédentes, dans lequel la partie de blocage (4) comprend une pluralité de tronçons de blocage (12), de préférence au nombre de deux ou d'un multiple de deux, qui sont agencés de préférence en opposition.

7. Dispositif de fixation selon la revendication 5 ou 6, dans lequel le tronçon de blocage (12) est réalisé comme un arceau sensiblement en forme de U, dont les parois latérales qui forment les branches du U peuvent être amenées en engagement avec l'écrou (60).

8. Dispositif de fixation selon l'une des revendications précédentes, dans lequel au moins la partie intermédiaire (6) est réalisée en métal, de préférence en acier-ressort.

9. Dispositif de fixation selon l'une des revendications précédentes, dans lequel au moins la partie de fixation (2) et la partie de blocage (4) sont réalisées en matière plastique.

10. Dispositif de fixation selon l'une des revendications précédentes, réalisé au moins localement en un matériau indicateur de température.

11. Liaison vissée, en particulier pour des essieux de véhicules, comprenant un élément de vissage (50), un écrou (60), en particulier un écrou d'essieu, et un dispositif de fixation pour l'écrou (60), qui comprend
une partie de fixation (2), en engagement ou susceptible d'être amenée en engagement avec l'élément de vissage (50),
une partie de blocage (4), en engagement ou susceptible d'être amenée en engagement avec l'écrou (60),
une partie intermédiaire (6), qui établit une liaison à coopération de forces entre la partie de fixation (2) et la partie de blocage (4),
dans laquelle la partie intermédiaire (6) est réalisée en un matériau capable de rappel et sous forme d'un élément en plaque, et est conçue, lors d'une rotation de la partie de blocage (4) par rapport à la partie de fixation (2), pour exercer un couple de rappel (M_{R}) dirigé vers l'état d'origine,
dans laquelle la partie de fixation (2) comprend au moins un tronçon de fixation (8) qui est conçu pour venir en engagement avec une gorge (54) qui s'étend axialement dans la paroi intérieure d'un ressaut (52), s'étendant axialement, de l'élément de vissage (50), et le dispositif de fixation est réalisé d'une seule pièce.
